# EUROPEAN PATENT APPLICATION

(11) **EP 4 092 821 A1**
(43) Date of publication of application: **23.11.2022**
(21) Application number: 22174552.4
(22) Date of filing: 20.05.2022
(51) Int. Cl.: H01M 50/503, H01M 50/507, H01M 50/204

(54) **BATTERY MODULE**

(30) Priority: 20.05.2021 KR 20210064827
(71) Applicant: Samsung SDI Co., Ltd., Yongin-si, Gyeonggi-do 17084 (KR)
(72) Inventor: KIM, Young Deok, 17084 Yongin-si (KR)
(74) Representative: Marks & Clerk LLP

(57) **Abstract**

A battery module includes a battery cell including an electrode terminal, a holder adjacent to the battery cell, the holder having an opening at a position corresponding to the electrode terminal, at least one busbar including a seating part and a connection part extending from the seating part, the seating part being positioned on the holder, and the connection part being electrically connected to the electrode terminal through the opening of the holder, and a fixing part covering at least a portion of an edge of the seating part, the fixing part being integrated with the holder.

## Description

### BACKGROUND

### 1. Field

Embodiments relate to a battery module.

### 2. Description of the Related Art

A secondary battery is a battery that can be repeatedly charged and discharged, unlike a primary battery. A small-capacity secondary battery is mainly used for portable small electronic devices, e.g., mobile phones, cameras, laptops, and the like, and a large-capacity secondary battery is used for, e.g., driving motors or storing energy of electric scooters, hybrid vehicles, electric vehicles, or the like.

The large-capacity secondary battery may be provided as a module in which a plurality of battery cells are connected in series or parallel to each other by a busbar, i.e., a battery module. For example, the battery module may include a hook disposed on a busbar holder, and the busbar is mounted on the hook to fix the busbar.

### SUMMARY

According to an aspect of embodiments, a battery module may include a battery cell including an electrode terminal, a holder adjacent to the battery cell, the holder having an opening at a position corresponding to the electrode terminal, at least one busbar including a seating part and a connection part extending from the seating part, the seating part being positioned on the holder, and the connection part being electrically connected to the electrode terminal through the opening of the holder, and a fixing part covering at least a portion of an edge of the seating part, the fixing part being integrated with the holder.

The busbar may be provided in a U shape and have both ends, each of which constitutes the connection part, and an intermediate portion that constitutes the seating part.

The busbar may be provided in plurality, and the plurality of busbars may be alternately arranged upside down vertically to cross each other.

In the busbar, the seating part may be provided in an isosceles trapezoidal shape, the connection part may extend from an area corresponding to the base of each of the isosceles trapezoidal seating parts. The fixing part may be provided along an area corresponding to both hypotenuses of the isosceles trapezoidal seating part.

In the busbar, a stress relaxation part that is cut at a predetermined curvature radius inward from an edge thereof may be provided between the seating part and the connection part.

The busbar may include a positioning part that is concavely recessed or convexly protrudes from the edge of the seating part, and the holder may include an engagement part corresponding to the positioning part.

The fixing part may be provided through an overmolding process.

At least some of the above and other features of the invention are set out in the claims.

### BRIEF DESCRIPTION OF THE DRAWINGS

Features will become apparent to those of skill in the art by describing in detail embodiments with reference to the attached drawings, in which:
FIG. 1 is a perspective view of a battery module according to an embodiment;
FIG. 2 is an enlarged view of portion A in FIG. 1;
FIG. 3 is a plan view of the battery module according to an embodiment;
FIG. 4 is a cross-sectional view taken along line B-B in FIG. 3;
FIG. 5 is an enlarged view of portion C in FIG. 3;
FIG. 6 is a view of the holder of FIG. 5; and
FIG. 7 is a view of the busbar of FIG. 5.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. In addition, it will also be understood that when a layer is referred to as being "between" two layers, it can be the only layer between the two layers, or one or more intervening layers may also be present. Like reference numerals refer to like elements throughout.

As used herein, the term "and/or" includes any and all combinations of one or more of the associated listed items. In this specification, it will also be understood that when a member A is referred to as being connected to a member B, the member A can be directly connected to the member B or indirectly connected to the member B with an additional member therebetween.

The terms used herein are for illustrative purposes of the present disclosure only and should not be construed to limit the meaning or the scope of the present disclosure. As used in this specification, a singular form may, unless definitely indicating a particular case in terms of the context, include a plural form. Also, the expressions "comprise" and/or "comprising" used in this specification neither define the mentioned shapes, numbers, steps, operations, members, elements, and/or groups of these, nor exclude the presence or addition of one or more other different shapes, numbers, steps, operations, members, elements, and/or groups of these, or addition of these. The term "and/or" used herein includes any and all combinations of one or more of the associated listed items.

As used herein, terms such as "first," "second," etc. are used to describe various members, components, regions, layers, and/or portions. However, the members, components, regions, layers, and/or portions should not be defined by these terms. The terms do not mean a particular order, up and down, or superiority, and are used only for distinguishing one member, component, region, layer, or portion from another member, component, region, layer, or portion. Thus, a first member, component, region, layer, or portion which will be described may also refer to a second member, component, region, layer, or portion, without departing from the teaching of the present disclosure.

Spatially relative terms, such as "below," "lower", "above", "upper" and the like, may be used herein for ease of description to describe one element or feature's relationship to another element(s) or feature(s) as illustrated in the figures. These spatially relative terms are intended for easy comprehension of the present disclosure according to various process states or usage states of the present disclosure, and thus, the present disclosure is not limited thereto. For example, an element or feature shown in the drawings is turned inside out, the element or feature described as "below" may change into "above" or "upper". Thus, the term "lower" may encompass the term "upper" or "below".

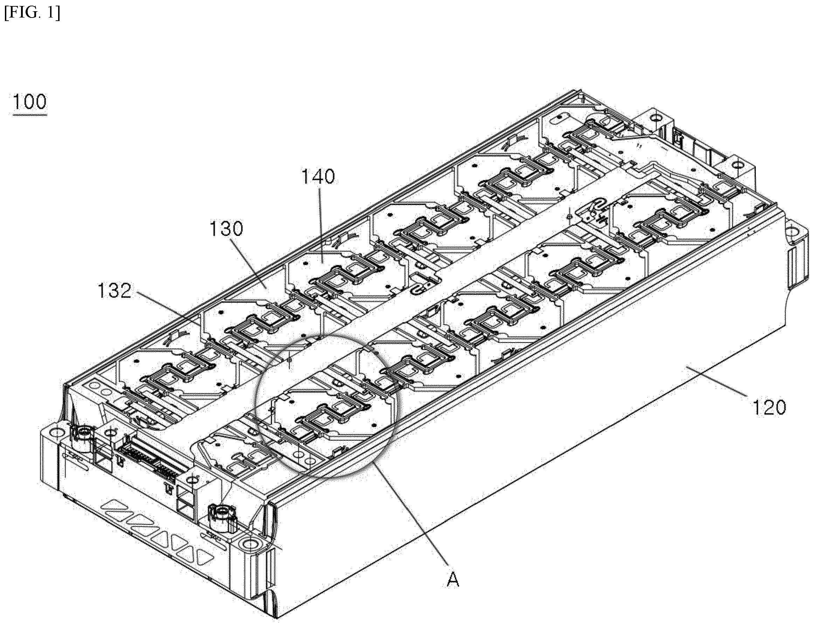

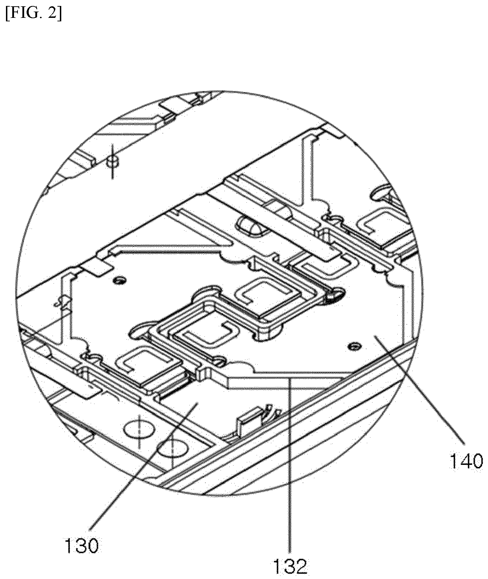

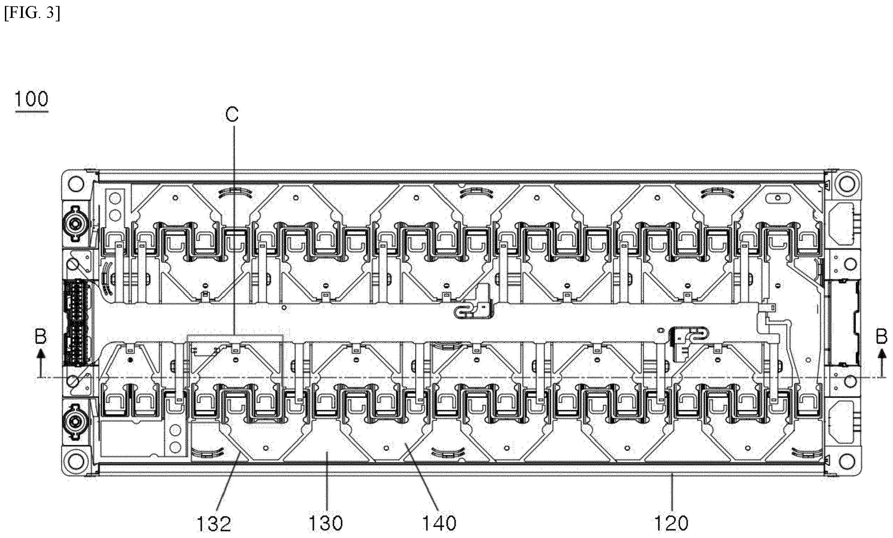

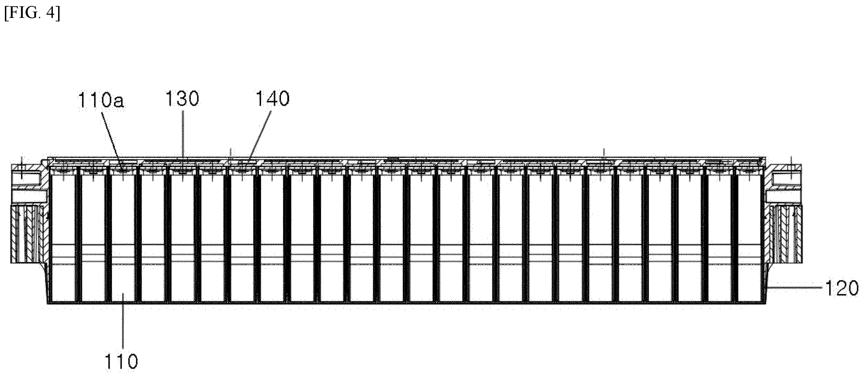

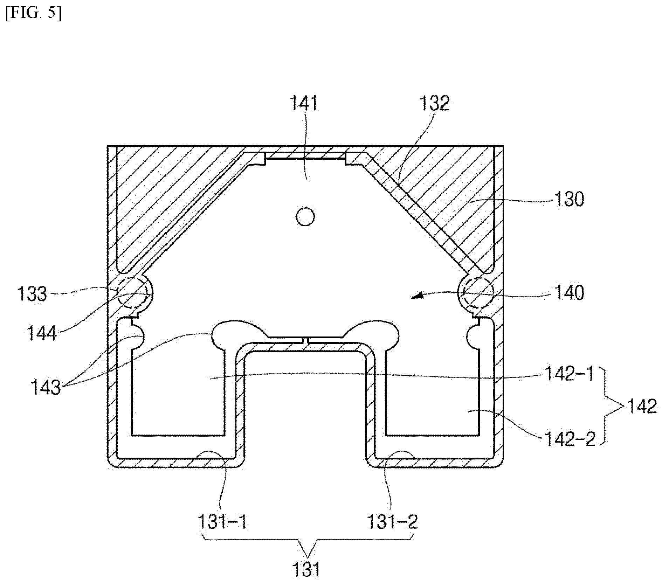

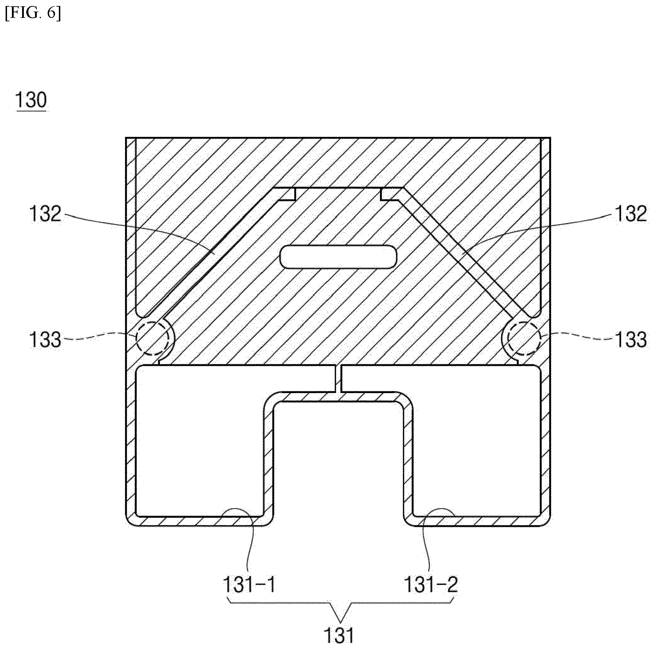

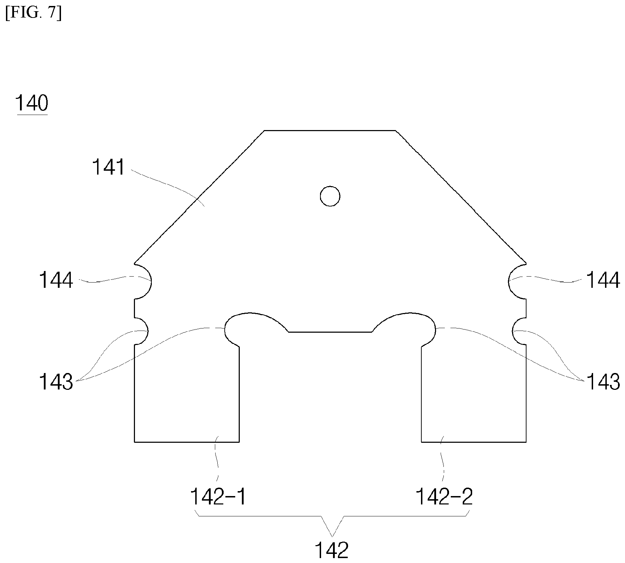

FIG. 1 is a perspective view of a battery module 100 according to an embodiment. FIG. 2 is an enlarged view of portion A in FIG. 1. FIG. 3 is a plan view of the battery module 100 according to an embodiment. FIG. 4 is a cross-sectional view taken along line B-B in FIG. 3. FIG. 5 is an enlarged view of portion C in FIG. 3. FIG. 6 is a view of the holder 130 of FIG. 5. FIG. 7 is a view of the busbar 140 of FIG. 5.

Referring to FIGS. 1 to 5, a battery module 100 according to an embodiment may include a battery cell 110, a case 120, a holder 130, and a busbar 140. For example, a plurality of battery cells 110 may be accommodated in the case 120, and a plurality of busbars 140 may be supported by holders 130 and may electrically connect the battery cells 110 to each other. In one example, one or more holders 130 (e.g. two) may support the plurality of busbars 140 within the battery module 100. In one example, a single (e.g. integral) holder 130 may provide connection points for a plurality of busbars 140. In one example, each busbar 140 may be supported and/or disposed upon its own holder 130, e.g. a plurality of holders 130 is provided.

In detail, referring to FIGS. 1 and 4, the battery cell 110 may include an electrode assembly having a positive electrode plate, a negative electrode plate, and a separator disposed between the positive electrode plate and the negative electrode plate. The battery cell 110 may further include a can, or the like, accommodating the electrode assembly and an electrolyte, and a cap plate configured to seal the can and including an electrode terminal 110a (e.g., a positive electrode terminal electrically connected to the positive electrode plate and a negative electrode terminal electrically connected to the negative electrode plate). The battery cell 110 may be any suitable or convenient battery cell, and an additional description thereof will be omitted.

As illustrated in FIGS. 1 and 4, the case 120 may accommodate a plurality of the battery cells 110, and may be fixedly installed in a device to which the battery module 100 is applied (e.g. a device that receives power from the battery module 100). While the drawings illustrate the case 120 as having a substantially rectangular parallelepiped shape, the case 120 may have any shape capable of properly accommodating the plurality of battery cells 110.

Referring to FIGS. 1 and 4, the holder 130 may be substantially plate shaped and may be disposed adjacent to the plurality of battery cells 110, e.g., the holder 130 may be over the plurality of battery cells 110. In the drawing, the holder 130 is exemplified to be disposed on the battery cell 110. In one example, the holder may extend integrally over the plurality of battery cells 110.

As illustrated in FIG. 6, in which only the holder 130 is illustrated, the holder 130 may have an opening 131 defined at a position corresponding to, e.g., overlapping, each of the positive and negative terminals (hereinafter, collectively referred to as 'electrode terminals') of the battery cell 110. For example, a first opening 131-1 is defined at a position corresponding to an electrode terminal of one battery cell 110, and a second opening 131-2 is defined at a position corresponding to an electrode terminal of another battery cell 110. In addition, the holder 130 may include a fixing part 132 that fixes the busbar 140, as will be described in more detail below. In one example, the fixing part 132 may be an overmolding layer.

As illustrated in FIGS. 1 and 4, the busbar 140 is configured to connect the plurality of battery cells 110 to each other in series or in parallel. As illustrated in FIG. 7, in which only the busbar 140 is illustrated, the busbar 140 may include a seating part 141 and a connection part 142 extending from the seating part 141. As illustrated in FIG. 5, the seating part 141 of the busbar 140 may be seated on the holder 130, and the connection part 142 of the busbar 140 may be electrically connected to the electrode terminal of the battery cell 110 through the opening 131 of the holder 130.

In detail, referring to FIGS. 3-5, the connection part 142 of the busbar 140 may include a first connection part 142-1 extending from one side of the seating part 141 so as to be electrically connected to the electrode terminal of one battery cell 110 through the first opening 131-1 of the holder 130, and a second connection part 142-2 extending from the other side of the seating part 141 so as to be electrically connected to the electrode terminal of another battery cell 110 through the second opening 131-2 of the holder 130. For example, as illustrated in FIG. 7, the busbar 140 may be substantially U-shaped, (e.g. may have a U-shape) in a top view, so that two ends of the busbar 140 (i.e., the first and second connection parts 142-1 and 142-2) protrude in a same direction and constitute the connection part 142, and an intermediate portion therebetween constitutes the seating part 141. In another example, the busbar 140 may have an S-shape, in a top view, so both ends of the busbar 140 (i.e., the first and second connection parts 142-1 and 142-2) protrude in opposite directions, with the seating part 141 therebetween.

For example, the busbar 140 may be provided in plurality, and the plurality of busbars 140 may be alternately arranged upside down vertically to cross each other. For example, as illustrated in FIGS. 1 and 3, every two of the busbars 140 may be arranged upside down vertically with respect to each other, so one end of one busbar 140 (e.g., the first connection part) may be inserted and positioned in a space between the first and second connection parts of another busbar 140, so the seating parts of the two busbars 140 may protrude in opposite directions away from each other. For example, as illustrated in FIG. 3, a first busbar 140 may be arranged such that the first and second connection parts 142-1, 142-2 of the first busbar 140 extend from the seating part 141 of the first busbar 140 to the right, whereas a second busbar 140 may be arranged such that the first and second connection parts 142-1, 142-2 of the second busbar 140 extend from the seating part 141 of the second busbar 140 in the same plane but to the left, so that the respective first and second connection parts 142-1, 142-2 of the first and second busbars 140 face (e.g. extend) in opposite directions. Moreover, the first and second busbars 140 are arranged such that the first and second busbars 140 interlock with one another, a first or second connection part 142-1, 142-2 of the first busbar 140 being inserted into the space between the first and second connection parts 142-1, 142-2 of the second busbar 140 (or vice versa). Thus, in an example, pairs of interlocked busbars 140 may be arranged next to one another, as shown in FIG. 3, such that the first and/or second connection parts 142-1, 142-2 of one interlocked pair is adjacent the first and/or second connection parts 142-1, 142-2 of another interlocked pair, forming a line of adjacent interlocked pairs.

For example, when a series of battery cells 110 are arranged to be adjacent to each other along a first direction, e.g., a direction parallel to a longitudinal direction of the bottom of the case 120, the battery cells 110 may be sequentially referred to as a first battery cell, a second battery cell, a third battery cell, a fourth battery cell, etc. For example, in this case, a first busbar 140 maybe connected to the first and third battery cells, and a second busbar 140 may be inverted relative to the first busbar 140 and connected to the second and fourth battery cells 110. In detail, referring to FIG. 3, the first busbar 140 may be oriented as an inverted U-shape (i.e., an intersection sign ∩), so that the first connection part is electrically connected to the electrode terminal of the first battery cell, and the second connection part is electrically connected to the electrode terminal of the third battery cell. Further, the second busbar 140 may be oriented in a U-shape (i.e., a union symbol U), so that the first connection is disposed between the first connection part and the second connection part of the first busbar 140 to be electrically connected to the electrode terminal of the second battery cell, and the second connection part is electrically connected to the electrode terminal of the fourth battery cell. For example, pairs of busbars 140 may be repeatedly arranged to be adjacent to each other along the first direction to be connected to sequential battery cells 110.

In the busbar 140, the seating part 141 is provided in a substantially isosceles trapezoidal shape, as viewed in a top view, and each of the connection parts 142 may extend from an area corresponding to the base of the isosceles trapezoidal seating part 141. As such, when the seating part 141 is provided in an isosceles trapezoidal shape (e.g., as compared to a rectangle), both upper corners that do not play a substantial role in electrically connecting the plurality of battery cells 110 may be removed (e.g., corners removed from a rectangle to arrive at the isosceles trapezoid) (e.g. omitted) to minimize material and weight of the busbar 140, thereby optimizing current distribution for the two battery cells 110 through the symmetrical structure.

Furthermore, in the busbar 140, a stress relaxation part 143 that is concavely cut at a predetermined curvature radius inwardly from an edge thereof may be provided between the seating part 141 and the connection part 142. Accordingly, a risk of damage to the busbar 140 may be reduced by preventing stress from being concentrated between the seating part 141 and the connection part 142 when the busbar 140 is deformed, so that the first connection part 142-1 and the second connection part 142-2 move away from or close to each other due to swelling of the battery cell 110.

The busbar 140 may be coupled to the holder 130 to form a coupling structure through, for example, an overmolding process, e.g., chemical joining of materials without using an adhesive. In detail, referring to FIGS. 5 and 6, the seating part 141 may be seated on the holder 130, and the connection part 142 of the busbar 140 may be disposed in, e.g., overlap, the opening 131 of the holder 130, e.g., each of the first and second openings 131-1 and 131-2 may be wider than a corresponding one of the first and second connection parts 142-1 and 142-2 in a top view. The fixing part 132, e.g., an overmolding layer, may cover at least a portion of the edge of the seating part 141 to affix, e.g., couple, the seating part 141 with the holder 130 through the overmolding process, e.g., the fixing part 132 may coat or encapsulate a portion of the edge of the seating part 141 and a portion of the holder 130. Accordingly, the fixing part 132 may be integrated with the holder 130, such that the holder 130 and the busbar 140 are integrated with each other into a singular part via the fixing part 132, e.g., a singular part where two materials are bonded to each other without an adhesive both chemically (e.g., on a molecular level) and mechanically (e.g., based on geometry of components that would require significant deformation to separate from each other).

In the drawing, the structure, in which the fixing part 132 (which in one example may be an overmolding layer) is provided along an area corresponding to both hypotenuses of the isosceles trapezoidal seating part 141, is illustrated as an example. (For example, in a case where the isosceles trapezoidal seating part 141 is substantially bisected along a theoretical axis of symmetry, thus substantially forming two right-angles, the area or side along which the fixing part 132 is provided corresponds to the sides (e.g. the longest sides) opposite those right-angles). A voltage measuring circuit may be configured through an area corresponding to an upper side of the isosceles trapezoidal seating part 141, on which the fixing part 132 is not provided (e.g., see an electrical connection connected to the seating part 141 between portions of the fixing part 132 in FIG. 2).

In addition, only a portion of the edge of the seating part 141 may be covered by the fixing part 132, and a remaining entire top surface may be opened. Thus, as described above, if the busbar 140 is deformed due to swelling of the battery cell 110, stress may be prevented from being locally concentrated at any one point.

Further, as illustrated in FIG. 7, the busbar 140 may include a positioning part 144 that is concavely recessed inwardly or convexly protrudes outwardly from the edge of the seating part 141, and the holder 130 may include an engagement part 133 (FIG. 6) corresponding to the positioning part 144. In the drawing, the structure, in which the positioning part 144 concavely recessed inwardly from each of the edges thereof is disposed on each of areas corresponding to both lower edges of the isosceles trapezoidal seating part 141, is illustrated as an example. Accordingly, when overmolding, for example, is performed, e.g., to form an overmolding portion, the positioning part 144 and the engagement part 133 may be engaged with each other to accurately set the position of the busbar 140 with respect to the holder 130.

By way of summation and review, an operator may be required to manually mount a plurality of busbars on a hook (for example) one by one to affix the busbars to a busbar holder. However, such manual assembly may increase manufacturing costs and time, the hook may be susceptible to breakage, the busbar may not be properly mounted on the busbar holder (in accordance with the skill level of the operator), and it may be difficult to precisely control a position of the busbar on the busbar holder due to (for example) an assembly tolerance between the hook and the busbar.

In contrast, an aspect of the present disclosure provides a battery module having a busbar coupling structure that is simple, inexpensive, and easy to be manufactured. That is, according to example embodiments, the busbar 140 may be placed on the holder 130, and the fixing part 132 that covers at least a portion of the edge of the busbar 140 may be integrated with the holder 130 and the busbar 140, for example, through an overmolding process, to provide the battery module 100 having the busbar 140 with a coupling structure that is simple, inexpensive, and easy to be manufactured.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A battery module, comprising:
a battery cell including an electrode terminal;
a holder adjacent to the battery cell, the holder having an opening at a position corresponding to the electrode terminal;
at least one busbar including a seating part and a connection part extending from the seating part, the seating part being positioned on the holder, and the connection part being electrically connected to the electrode terminal through the opening of the holder; and
a fixing part covering at least a portion of an edge of the seating part, the fixing part being integrated with the holder.

2. The battery module as claimed in claim 1, wherein the at least one busbar has a U-shape, two ends of the U-shape constituting the connection part, and an intermediate portion between the two ends of the U-shape constituting the seating part.

3. The battery module as claimed in claim 2, including a plurality of busbars, the plurality of busbars being alternately arranged upside down vertically to cross each other.

4. The battery module as claimed in any one preceding claim 1, wherein the seating part of the at least one busbar has an isosceles trapezoidal shape, in a top view, the connection part extending from a base of the isosceles trapezoidal shape of the seating part.

5. The battery module as claimed in claim 4, wherein the fixing part is provided along both hypotenuses of the isosceles trapezoidal shape of the seating part.

6. The battery module as claimed in any one preceding claim, wherein the at least one busbar further includes a stress relaxation part between the seating part and the connection part, the stress relaxation part being inwardly cut at a predetermined curvature radius at an edge of the at least one busbar.

7. The battery module as claimed in any one preceding claim, wherein:
the at least one busbar further includes a positioning part that is concavely recessed or convexly protrudes from the edge of the seating part, and
the holder includes an engagement part corresponding to the positioning part.

8. The battery module as claimed in any one preceding claim, wherein the fixing part is an overmolding layer.
